# EUROPÄISCHE PATENTSCHRIFT

(11) **EP 0 704 389 B1**
(45) Veröffentlichungstag und Bekanntmachung des Hinweises auf die Patenterteilung: **18.11.1998**
(21) Anmeldenummer: 95890160.5
(22) Anmeldetag: 11.09.1995
(51) Int. Cl.: B65G 1/16, B65G 49/06

(54) **Vorrichtung zum Lagern von Glastafeln und Isolierglasscheiben**
Device for storing glassplates or insulating glasspanes
Dispositif pour stocker des panneaux de verre ou des vitres isolantes

(30) Priorität: 27.09.1994 AT 1837/94
(43) Veröffentlichungstag der Anmeldung: 03.04.1996
(73) Patentinhaber: Lisec, Peter, 3363 Amstetten-Hausmening (AT)
(72) Erfinder: Lisec, Peter, 3363 Amstetten-Hausmening (AT)
(74) Vertreter: Hehenberger, Reinhard, Dipl.-Ing.

(56) Entgegenhaltungen:
- EP-A- 0 477 163
- EP-A- 0 603 151
- WO-A-95/25688

## Beschreibung

Die Erfindung betrifft eine Vorrichtung zum Lagern von tafel- oder plattenförmigen Gegenständen, wie Glastafeln oder Isolierglasscheiben, mit mehreren etwa vertikal ausgerichteten Fächern zur Aufnahme der Gegenstände, wobei die Fächer von seitlichen Abstützungen in Form von gespannten stab- oder schnurartigen Elementen, an denen frei drehbare Rollen angeordnet sind, begrenzt werden.

Eine derartige Vorrichtung ist aus der EP-A-477 163 bekannt.

Um die tafelförmigen Gegenstände vor Beschädigungen durch die stab- oder schnurartigen Elemente, beispielsweise Stahlseile, zu schützen, sind gemäß der EP-A-603 151 die stab- oder schnurartigen Elemente mit Kunststoffhüllen überzogen. Diese Kunststoffhüllen haben jedoch den Nachteil, daß jedes Mal beim Hinein- oder Herausschieben einer Glastafel deren vordere Kante oder Ecke an der Kunststoffhülle anstößt und diese beschädigt, indem sie ein Stück abschält bzw. daß bei scharfkantigen Rändern der Glastafel die Kunststoffhüllen aufgeschnitten werden.

Um dies zu vermeiden, ist beispielsweise in der EP-A-477 163 vorgeschlagen worden, an den die Fächer begrenzenden stab- oder schnurartigen Elementen Rollen vorzusehen. Diese Rollen haben jedoch gegenüber den stab- oder schnurartigen Elementen einen relativ großen Durchmesser, so daß sie vergleichsweise viel Platz beanspruchen und somit bei gleicher Fachbreite und Fachanzahl der Vorrichtung eine breitere Vorrichtung bedingen oder daß bei gleicher Vorrichtungsbreite die Anzahl der Fächer verringert ist.

Der Erfindung liegt daher die Aufgabe zugrunde, bei Vorrichtungen der eingangs genannten Gattung die genannten Nachteile zu vermeiden.

Gelöst wird diese Aufgabe gemäß der Erfindung bei einer gattungsgemäßen Vorrichtung dadurch, daß die Rollen über die stab- oder schnurartigen Elemente geschobene, zylinderförmige Rohrstücke sind, die über ihre zur Achse der stab- oder schnurartigen Elemente senkrecht ausgerichteten Stirnflächen lose aneinander anliegen.

Die Erfindung sieht Rohrstücke vor, die gegenüber den stab- oder rohrartigen Elementen ganz wenig auftragen, d.h. daß sie deren Durchmesser nur wenig vergrößern, was durch ihre rohrartige Form mit einer Länge von beispielsweise 2 bis 3 cm möglich ist. Dadurch, daß sie gegenüber den stab- oder schnurartigen Elementen verdrehbar sind, rollen die Glastafeln an ihnen ab, ohne daß es zu den erwähnten Beschädigungen kommt.

Da die Rohrstücke eine zylinderförmige Außenform aufweisen, bleibt die äußere Kontur der seitlichen Abstützungen im wesentlichen zylinderförmig.

Da bei einigen Ausführungsformen gattungsgemäßer Vorrichtungen, wie sie beispielsweise in der EP-A-477 163 und EP-A-603 151 beschrieben sind, den Fächern heb- oder senkbare Fördermittel zugeordnet sind, ergeben sich Vertikalbewegungen der tafel- oder plattenförmigen Gegenstände, welche behindert würden, wenn wie in der EP-A-477 163 Rollen vorgesehen sind, an welchen die Gegenstände mit ihren oberen Längsrändern anstoßen können. Bei den Kunststoffumhüllungen gemäß der EP-A-603 151 wiederum würde eine Beschädigung der Kunststoffumhüllung erfolgen.

Um diese Vertikalbewegungen zu ermöglichen, ist gemäß einer weiteren bevorzugten Ausführungsform der Erfindung daher vorgesehen, daß die Rohrstücke gegenüber den stab- oder schnurartigen Elementen in deren Längsrichtung verschiebbar sind.

Wenn die Rohrstücke gegenüber den stab- oder schnurartigen Elementen in deren Längsrichtung verschiebbar sind, können sie sich bei der Vertikalbewegung der plattenförmigen Elemente mit diesen verschieben, ohne daß es zu einer Behinderung dieser Bewegung oder einer Beschädigung der Rohrstücke durch eine Relativbewegung zwischen den plattenförmigen Gegenständen und den Rohrstücken kommt.

Um diese Relativbewegung der Rohrstücke in Längsrichtung zu den stab- oder schnurartigen Elementen zu ermöglichen, kann die Erfindung z.B. dadurch weitergebildet sein, daß zwischen dem obersten Rohrstück auf jedem stab- oder schnurartigen Element und der Halterung der oberen Enden der stab- oder schnurartigen Elemente ein Abstand vorgesehen ist, in dem keine Rohrstücke vorgesehen sind.

Auf diese Weise können sich in Abhängigkeit von der Höhe der tafelförmigen Gegenstände die am und über dem oberen Längsrand des jeweiligen Gegenstandes angeordneten Rohrstücke frei nach oben bewegen und anschließend wieder nach unten fallen, nachdem der Gegenstand entweder aus dem Fach entfernt oder wieder abgesenkt wurde.

Weitere Merkmale und Vorteile der Erfindung ergeben sich aus der nachfolgenden Beschreibung von Ausführungsbeispielen der Erfindung. Es zeigt:
Fig. 1 eine Vorrichtung zum Lagern von tafel- und plattenförmigen Gegenständen in Schrägansicht,
Fig. 2 eine Einzelheit dieser Vorrichtung,
Fig. 3 einen Teil einer weiteren Ausführungsform der Erfindung,
Fig. 4 stab- oder schnurartige Elemente mit den erfindungsgemäßen Rohrstücken und
Fig. 5 einen Ausschnitt von Fig. 4 in vergrößertem Maßstab und im Schnitt.

Die Vorrichtung besteht aus einer Bodenplatte 1, die an ihrer Unterseite Füße 2 aufweist. Die Füße 2 können, so wie in der Zeichnung gezeigt, mit Rollen 3 bestückt sein, wobei wenigstens ein Teil der Rollen 3 als Lenkrollen ausgebildet sein kann. Die Vorrichtung ist dann ein sogenannter "Fächerwagen".

Von der Bodenplatte 1 ragen Steher 4 und 5 nach oben und tragen an ihren oberen Enden einen Balken 6.

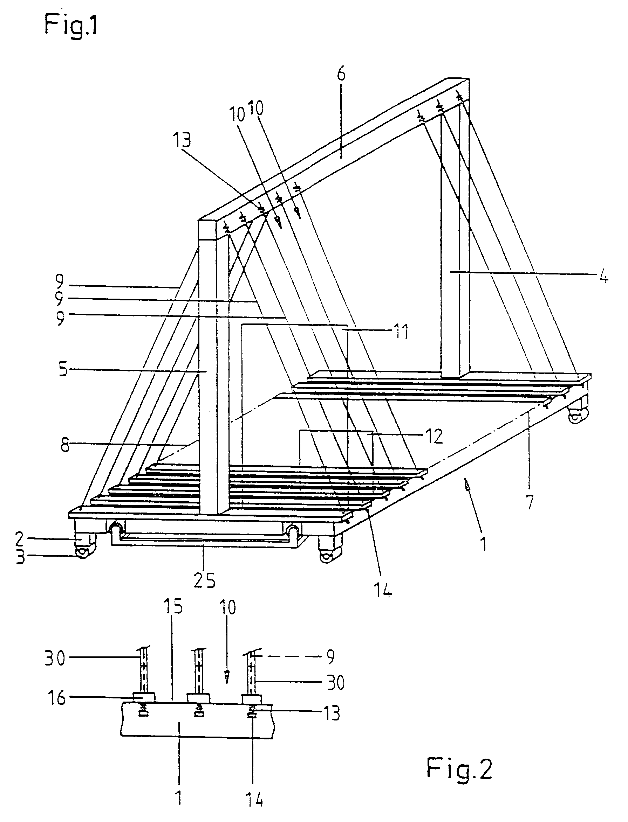

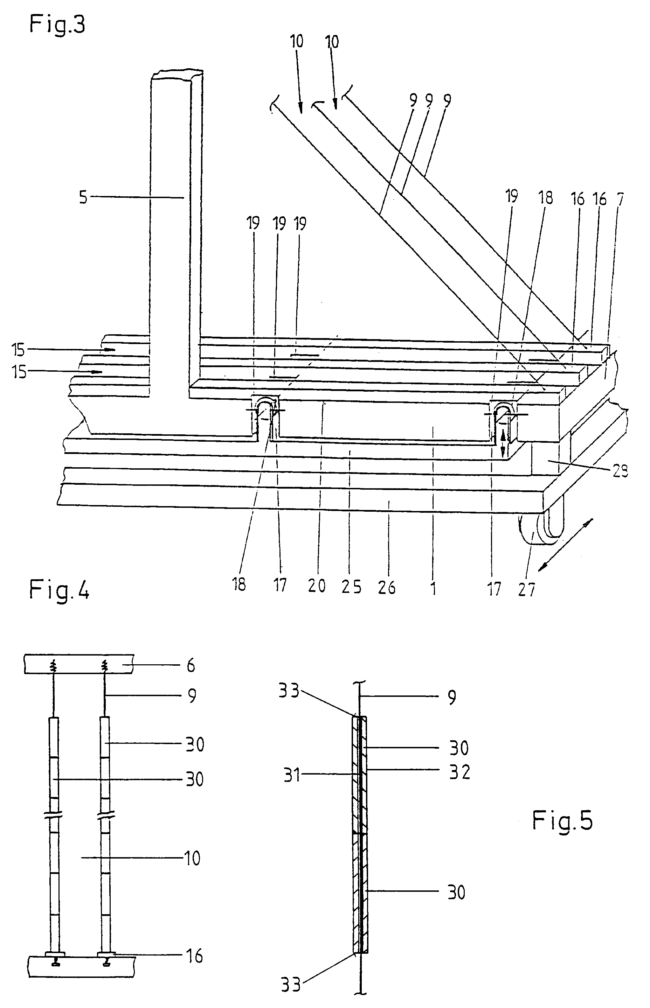

Zwischen den Längsrändern 7 und 8 der Bodenplatte 1 und dem Balken 6 sind stab- oder schnurartige Elemente 9 gespannt, die zwischen sich jeweils ein Fach 10 bilden, in das tafelförmige Gegenstände 11, 12 eingeschoben werden können. Über die stab- oder schnurartigen Elemente 9 sind in den Fig. 1 und 3 nicht dargestellte Rohrstücke 30 gesteckt, die weiter unten näher beschrieben werden.

Es ist auch eine Ausführungsform möglich, bei der die stab- oder schnurartigen Elemente 9 vom Balken 6 nur nach einer Seite, d.h. zum Längsrand 7 oder 8 der Bodenplatte 1 gespannt sind. Bei dieser Ausführungsform sind die Steher 4 und 5 bevorzugt an einem der Längsränder der Bodenplatte 1, d.h. in zwei Ecken derselben angeordnet.

Die stab- oder schnurartigen Elemente 9 sind beispielsweise Stahlseile, über welche die Rohrstücke 30 geschoben sind, die in Fig. 4 und 5 näher dargestellt sind. Um die nötige Spannung der stab- oder schnurartigen Elemente 9 zu gewährleisten, können, wie dies an sich aus der EP-A- 477 613 bekannt ist, an einem oder an beiden Enden der Elemente 9 kurze Federn 13 vorgesehen sein, die mit Hilfe von Muttern 14 gespannt werden können, um die Elemente vorzuspannen (Fig. 2).

Im Bereich jedes Faches 10 sind in der Oberseite der Bodenplatte 1 Nuten 15 vorgesehen, die beidseits von Leisten 16 begrenzt werden, die z.B. auf der Bodenplatte 1 angeschraubt oder mit ihr einstückig ausgebildet sind. Dabei sind die Nuten 15 etwas schmäler als die von den stab- oder schnurförmigen Elementen 9 bestimmte Breite der Fächer 10, so daß sich eine Führung der einzuschiebenden plattenförmigen Gegenstände 11, 12 ergibt und diese nicht an in benachbarten Fächern 10 abgestellten Gegenständen 11, 12 entlangschleifen können. Weiters sorgen die Nuten 15 dafür, daß in den Fächern 10 abgestellte tafelförmige Gegenstände 11, 12 nur im Bereich ihrer oberen Kante an dem einen oder anderen stab- oder schnurförmigen Element 9, das ein Fach 10 begrenzt, anliegen.

Durch die Schrägstellung der stab- oder schnurförmigen Elemente 9, welche die Fächer 10 begrenzen, genügen je Fach 10 zwei stab- oder schnurförmige Elemente 9, um auch das sichere Abstellen von Gegenständen 11, 12 mit unterschiedlicher Höhe (senkrecht zur Bodenplatte 1 gemessene Erstreckung der abzustellenden Gegenstände) sicher zu halten.

Wie aus Fig. 1 und 3 ersichtlich, sind in der Bodenplatte 1 quer zu den Nuten 15 verlaufende, nach unten offene Ausnehmungen 17 vorgesehen, in welchen Transportwalzen 18 aufgenommen sind. Dabei können auch in den Leisten 16 an ihrer der Bodenplatte 1 zugewandten Seite 20 Ausnehmungen 19 vorgesehen sein, die über den quer zu den Nuten 15 verlaufenden Ausnehmungen 17 in der Bodenplatte 1 angeordnet sind. Die Ausnehmungen 19 in den Leisten 16 sind so tief, daß die Transportwalzen 18 so weit hochgehoben werden können, daß sie in die Nuten 15 ragen und somit die tafelförmigen Gegenstände 11, 12 in die oder aus den Fächern 10 fördern können.

Die Transportwalzen 18 sind im dargestellten Ausführungsbeispiel an einem Rahmen 25 befestigt, der entweder starr an der Bodenplatte 1 befestigt ist, jedoch bevorzugt z.B. über Druckmittelzylinder relativ zur Bodenplatte 1 verstellbar ist, so daß die Transportwalzen 18 außer Eingriff mit den in den Fächern 10 aufgenommenen tafelförmigen Gegenständen 11, 12 gebracht werden können.

Bei dem in Fig. 1 dargestellten Ausführungsbeispiel ist der Rahmen 25, in dem die Transportwalzen 18 gelagert sind, an der Bodenplatte 1 angeordnet.

In Fig. 3 ist der Rahmen 25 auf nicht dargestellte Weise an einem Grundrahmen 26 angeordnet und gegebenenfalls, z.B. über Druckmittelzylinder, heb- und senkbar. Die Vorrichtung steht mit Füßen 28 auf dem Grundrahmen. Der Grundrahmen 26 weist Laufrollen 27 auf, von denen wenigstens ein Paar als Lenkrollen ausgebildet sein kann. Auf diese Weise ist die Vorrichtung mit den Fächern 10 entweder für sich alleine (Fig. 1) oder über den Grundrahmen 26 (Fig. 3) verfahrbar und kann gegenüber einer vorgelagerten Fördereinrichtung, aber beispielsweise auch gegenüber einem weiteren, hinter dem Fächerwagen angeordneten Fächerwagen positioniert werden, so daß z.B. Glastafelzuschnitte nach beliebigen Ordnungskriterien in hintereinander angeordneten Fächerwagen sortiert werden können, wie dies an sich aus der EP-A-477 163 bekannt ist.

In den Fig. 4 und 5 ist ein stab- oder schnurartiges Element 9 mit darüber geschobenen, zylinderförmigen Rohrstücken 30, die in den Fig. 1 und 3 nicht eingezeichnet wurden, in vergrößertem Maßstab dargestellt. Die Rohrstücke 30 weisen die Form einer Rohrhülse mit einer Bohrung 31 und einem zylinderförmigen Außenmantel 32 auf und liegen über zu ihrer Längsachse senkrecht ausgerichtete Stirnflächen 33 lose aneinander an. Die Rohrstücke 30 sind vorzugsweise aus Kunststoff hergestellt.

Das unterste Rohrstück 30 liegt, wie in Fig. 2 und 4 dargestellt ist, auf der Leiste 16 auf und das oberste Rohrstück 30 ist vom Balken 6 bzw. den Federn 13 wenigstens so weit beabstandet, wie der Hub des Rahmens 25 beträgt.

Stößt bzw. liegt eine Glastafel beim Hinein- oder Herausschieben an einem Rohrstück 30 an, so kann sich dieses frei auf seinem stab- oder schnurartigen Element 9 drehen, so daß es an der Glastafel abrollt und von diesem nicht aufgeschnitten oder sonst beschädigt wird.

Wird eine Glastafel vom Rahmen 25 hochgehoben, während sie beispielsweise geringfügig gegenüber dem Stahlseil 9 geneigt mit ihrer oberen Längskante an einem Rohrstück 30 anliegt, dann wird dieses Rohrstück 30 sowie die darüber befindlichen Rohrstücke 30 ebenfalls nach oben geschoben, ohne daß es zu einer die Rohrstücke 30 beschädigenden Relativbewegung zwischen diesen und der Glastafel kommt und ohne daß die Hubbewegung der Glastafel behindert wird.

Durch die Erfindung wird somit eine Möglichkeit zur Verfügung gestellt, den direkten Kontakt zwischen den platten- oder tafelförmigen Gegenständen, wie Glastafeln oder Isolierglasscheiben, und den seitlichen Abstützungen mit gespannten stab- oder oder schnurartigen Elementen, beispielsweise Stahlseilen, zu verhindern, ohne daß es zu einer unnötigen Platzvergeudung oder einer Behinderung der Hubbewegung der Gegenstände wie gemäß der EP-A-477 163 oder zu einem sehr hohen Verschleiß der Kunststoffüberzüge wie bei der EP-A-603 151 kommt.

Zusammenfassend kann ein Ausführungsbeispiel der Erfindung wie folgt dargestellt werden:

Eine Vorrichtung zum Lagern von tafel- oder plattenförmigen Gegenständen 11, 12, wie Glastafeln oder Isolierglasscheiben, weist mehrere etwa vertikal ausgerichtete Fächer 10 zur Aufnahme der Gegenstände 11, 12 auf, wobei die Fächer 10 von seitlichen Abstützungen in Form von gespannten stab- oder schnurartigen Elementen 9 begrenzt werden. Um den direkten Kontakt zwischen den Gegenständen 11, 12 und den stab- oder schnurartigen Elementen 9, beispielsweise Stahlseilen, zu vermeiden, sind über die stab- oder schnurartigen Elemente 9 mehrere voneinander getrennte, lose aneinander anliegende, zylinderförmige Rohrstücke 30 gesteckt, die gegenüber den stab- oder schnurartigen Elementen 9 verdrehbar sind. Die Rohrstücke 30 sind gegenüber den stab- oder schnurartigen Elementen 9 in deren Längsrichtung verschiebbar und zwischen dem obersten Rohrstück 30 auf jedem stab- oder schnurartigen Element 9 und der Halterung 6 der oberen Enden der stab- oder schnurartigen Elemente 9 ist ein Abstand vorgesehen, in dem keine Rohrstücke 30 vorgesehen sind. Dadurch können die Rohrstücke 30 bei einer Horizontalbewegung der Gegenstände 11, 12 an diesen abrollen und bei einer Vertikalbewegung mitgleiten, so daß sie durch diese Bewegungen nicht beschädigt werden.

## Patentansprüche

1. Vorrichtung zum Lagern von tafel- oder plattenförmigen Gegenständen (11), wie Glastafeln oder Isolierglasscheiben, mit mehreren etwa vertikal ausgerichteten Fächern (10) zur Aufnahme der Gegenstände (11), wobei die Fächer (10) von seitlichen Abstützungen in Form von gespannten stab- oder schnurartigen Elementen (9), an denen frei drehbare Rollen (30) angeordnet sind, begrenzt werden, dadurch gekennzeichnet, daß die Rollen über die stab- oder schnurartigen Elemente (9) geschobene, zylinderförmige Rohrstücke (30) sind, die über ihre zur Achse der stab- oder schnurartigen Elemente (9) senkrecht ausgerichteten Stirnflächen (33) lose aneinander anliegen.

2. Vorrichtung nach Anspruch 1, dadurch gekennzeichnet, daß die Rohrstücke (30) gegenüber den stab- oder schnurartigen Elementen (9) in deren Längsrichtung verschiebbar sind.

3. Vorrichtung nach Anspruch 1 oder 2, dadurch gekennzeichnet, daß zwischen dem obersten Rohrstück (30) auf jedem stab- oder schnurartigen Element (9) und einer Halterung (6) der oberen Enden der stab- oder schnurartigen Elemente (9) ein Bereich vorgesehen ist, in dem keine Rohrstücke (30) vorgesehen sind.

4. Vorrichtung nach einem der Ansprüche 1 bis 3, dadurch gekennzeichnet, daß die Rohrstücke (30) aus Kunststoff bestehen.

## Claims

1. Device for storing panel- or pane-shaped articles (11), such a glass plates or insulating glass panes, with a plurality of roughly vertically-aligned compartments (10) for receiving the articles (11), the compartments (10) being defined by lateral supports in the form of tensioned rod- or cord-like elements (9) upon which are disposed freely rotatable rollers (30), characterised in that the rollers are cylindrical pipe sections (30) pushed over the rod- or cord-like elements (9), and which bear loosely against one another via their end faces (33) aligned vertically to the axis of the rod- or cord-like elements (9).

2. Device according to claim 1, characterised in that the pipe sections (30) are displaceable relative to the rod- or cord-like elements (9), in their longitudinal direction.

3. Device according to claim 1 or 2, characterised in that there is provided, between the uppermost pipe section (30) on each rod- or cord-like elements (9), and a retaining means (6) of the upper end of the rod-or cord-like elements (9), an area in which no pipe sections (30) are provided.

4. Device according to one of claims 1 to 3, characterised in that the pipe sections (30) consist of plastics.

## Revendications

1. Dispositif pour entreposer des objets (11) en forme de panneaux ou de plaques, tels que des feuilles de verre ou des vitrages isolants, avec plusieurs compartiments (10) orientés sensiblement verticalement pour recevoir les objets (11), les compartiments (10) étant délimités par des appuis latéraux sous la forme d'éléments tendus (9) de type barre ou cordon sur lesquels des galets sont montés libres en rotation, caractérisé par le fait que les galets sont des tronçons de tube (30) cylindriques qui sont enfilés sur les éléments (9) en forme de barres ou de cordons et sont en contact libre les uns avec les autres par leurs surfaces frontales (33), perpendiculaires à l'axe des éléments (9) en forme de barres ou de cordons.

2. Dispositif selon la revendication 1, caractérisé par le fait que les tronçons de tube (30) peuvent coulisser dans la direction longitudinale par rapport aux éléments (9) en forme de barres ou de cordons.

3. Dispositif selon la revendication 1 ou 2, caractérisé par le fait qu'il est prévu, entre le tronçon de tube (30) supérieur de chaque élément (9) en forme de barre ou de cordon et une fixation (6) des extrémités supérieures des éléments (9) en forme de barres ou de cordons, une zone dans laquelle aucun tronçon de tube (30) n'est prévu.

4. Dispositif selon une des revendications 1 à 3, caractérisé par le fait que les tronçons de tube (30) sont réalisés en une matière plastique.
